# EUROPEAN PATENT SPECIFICATION

(11) **EP 2 412 454 B1**
(45) Date of publication and mention of the grant of the patent: **01.11.2017**
(21) Application number: 11175327.3
(22) Date of filing: 26.07.2011
(51) Int. Cl.: B09C 1/00, B09C 1/02, C02F 1/00

(54) **Application of carbon dioxide in remediation of contaminated soils, sediments and aquifers**
Anwendung von Kohlendioxid zum Abbau verschmutzter Böden, Ablagerungen und Aquifer
Application de dioxyde de carbone pour remédier aux sols, sédiments et aquifères contaminés

(30) Priority: 30.07.2010 IT MI20101441
(43) Date of publication of application: 01.02.2012
(73) Proprietor: Societa' Italiana Acetilene & Derivati S.I.A.D. S.p.A. in abbreviated form SIAD S.p.A., 24126 Bergamo (IT)
(72) Inventor: Bissolotti, Giorgio, 24126 Bergamo (IT); Pasinetti, Eleonora, 24126 Bergamo (IT); Peroni, Michela, 24126 Bergamo (IT)
(74) Representative: Minoja, Fabrizio

(56) References cited:
- EP-A2- 1 029 604
- US-A- 5 290 528
- US-B1- 6 379 083

## Description

The invention refers to a process for the remediation of contaminated soil, sediments and aquifers by chemical and physical mechanisms of separation, characterized in that gaseous or liquid carbon dioxide (CO₂) is released into the soil.

### Background of the invention

The remediation of contaminated sites is becoming more and more important in the environmental field. Existing technologies can be divided into *in situ*, on site and *ex-situ* technology, according to which the reclamation is done directly in the ground, above ground at the site in question or above ground in another operating site.

The decontamination systems used can be biological, chemical or physical, using respectively the activity of biological degradation, the properties of reactive chemical agents and/or chemical and physical mechanisms of separation.

In particular, the chemical and physical processes appear to be those used for the separation of contaminants from solid matrices in order to be able to perform the extraction or make them available to chemical and /or biological degradation.

Among the chemical and physical mechanisms, there are technologies based on the stripping of volatile substances, on the thermal desorption and on the extraction/washing with solvents.

Stripping technologies are used both in-situ (Air-sparging, Soil Vapor Extraction, Dual Phase Extraction, etc.) and on-site/ex-situ and are often combined to a phase of adsorption of the extracted vapors on activated carbon.

Stripping processes are applicable for the extraction of volatile substances and then generally for light organic compounds with low vapor pressure. The heavier compounds adsorbed to the soil in general are not affected by the stripping extraction techniques.

The processes of thermal desorption and of extraction/washing with solvent are mainly applied *ex-situ*, using dedicated plants.

Thermal desorption is based on the principle of inducing volatilization and thus the desorption of organic compounds from the soil through the use of heat. The soil is heated in the combustor at temperatures from 90 to 650°C, with values typically of 420°C. The desorbed organic substances are evaporated and then conveyed to a second compartment for removal.

The application limits of thermal desorption are related to the size of the soil, to the re-use of soils and to the inherent risks of the treatment.

In particular, the heat treatment is not applicable on soils with fine sizes such as silt and clay because of the excessive production of dust that may cause problems for the management of suction filters.

From the viewpoint of reuse of treated soil, the use of temperatures lower than 460°C results in a depletion/deterioration of the soil requiring long periods to recover the quality for agronomic re-use. For temperatures above 500°C, soil suffers irreversible damage that prevents its agronomic use and limits its reuse as filling material.

The heat treatment has also not negligible components of risk, and it is necessary to provide accurate monitoring of explosion limits in desorption and post-desorption rooms in order to monitor that the evaporated contaminants does never determine the establishment of condition that may cause fire or explosions.

It must be underlined that the application of thermal desorption results to be a very expensive technology requiring, in addition to high energy consumption for heat production, the excavation and transport of soil to treatment plant, resulting in significant cost increases.

Soil washing treatments are performed ex-situ involving washing with water, eventually added with chemical reagents, to promote the dissolution and/or dispersal of contaminants. Usually the soil washing is ineffective and/or impractical in the case of the fine-grained soils in which the desorption process are harder and the levels of contamination higher. It should be noted, moreover, that often soil washing determines the production of wastewater with high content of contaminants, of residues of reagents and, not least, of thin dispersed material contaminated. This wastewater requires further treatment that may be particularly significant in technological and economical terms in order to meet discharge disposal and /or reuse limits.

An alternative to soil washing, or its possible post-treatment, appears to be extraction with solvent, such as ethyl acetate. This treatment is applicable to all types of soil particle size and it has the advantage to be carried out at room temperature requiring low power consumption. One drawback of the technology is the use of solvents which, because of their nature, can be a source of environmental pollution.

The purpose of the invention is to eliminate the drawbacks of the above mentioned known systems. With the present invention it is proposed an alternative and better, than those given above, application to obtain the desorption of contaminants from soils, sediments and aquifers, based on the use of carbon dioxide.

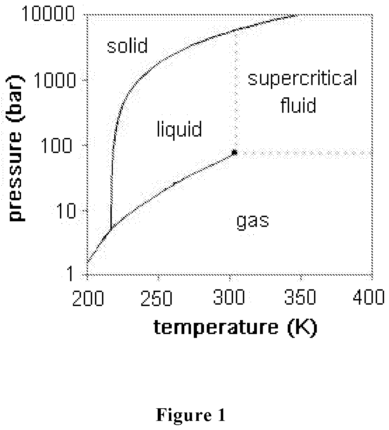

In order to better understand the use of carbon dioxide in its various phases, the state diagram is reported in Figure 1.

The triple point of carbon dioxide is at -56.6°C and 5.18 bar, while the critical point at 31°C and 74 bar. At ambient pressure and temperature carbon dioxide (or CO₂) is a colorless and odorless gas. At ambient pressure and at temperatures below -78°C carbon dioxide solidified (dry ice). At temperatures higher than -78°C, dry ice sublimates directly into gaseous form.

Carbon dioxide is liquefied at temperatures lower than 31°C and pressures higher than 74 bar. The liquefaction pressure varies with temperature (-20°C/19 bar -10°C/26 bar, 0°C/34 bar and 10°C/45 bar, 20°C/57 bar, 30°C/70 bar). For pressures above 74 bar and temperatures above 31°C, carbon dioxide is in the state of supercritical fluid.

The supercritical CO₂ is used in the chemical and food industry for extraction of particular substances in special reactors. Studies for the extraction of pollutants in supercritical CO₂ were also made for the treatment of waste or soil. However, these applications require the use of special reactors with operating pressures above 74 bar, and this strongly influences the treatment costs and the amount of soil or waste that can be treated. The use of supercritical CO₂ is not covered by this invention.

In the field of soil remediation, the contact of CO₂ with a wet soil can determine a change in the physical-chemical equilibrium between water and soil. In particular in case of contaminated soil in which exogenous substances are adsorbed on the soil, changing the chemical and physical equilibrium induced by the CO₂ injection, can induce changes in the mechanisms of interaction between the soil and contaminants.

The main mechanisms of interaction between the soil and contaminated are:
- solubilization;
- acid-base reactions;
- formation of complexes or chelates;
- redox reactions;
- hydrolysis;
- adsorption;
- volatilization;
- biological and/or chemical transformation.

Each of these mechanisms is governed by determined parameters such as temperature, pressure, pH, humidity, etc. In particular, some of these mechanisms occur only in the presence of water, while others make use of soil humidity.

Carbon dioxide is a highly water soluble gas (1.45 g/l at 20°C at ambient pressure) and when dissolved in aqueous solution determines the formation of carbonic acid and the subsequent dissociation in carbonate and bicarbonate. Because of these properties, the CO₂ is an element that can change the characteristics of an aqueous solution in terms of pH and salinity. In these terms, the injection of CO₂ may induce changes in the various existing mechanisms between soil and contaminants. In particular, its action can be expressed:
- in solubility equilibrium of substances, increasing the dissolution in the aqueous phase; in acid-base reactions, shifting the equilibrium existing between an acidic substance and its conjugate base;
- in complexes or chelates formation, supporting their formation or desegregation;
- in hydrolysis reactions, promoting or catalyzing them;
- in adsorption process, changing the organic carbon-water partition coefficients (Koc) of the contaminants due to the alteration of the solubility of the same;
- in volatilization of contaminants due to the effect of mechanical stripping and thanks to the alteration of solubility and adsorption;
- in chemical and/or biological transformations, promoting the dissolution of the adsorbed substances and the subsequent biological and/or chemistry degradation. Reactions may also be favored by the pH changes induced.

It is emphasized that the carbon dioxide results to be a not toxic compound. In these terms, its injection underground or in mounds of soil does not involve pollutants addition.

The solvent power of CO₂ is greatest when it is in supercritical phase, however, as shown by experience, its power to dissolve or to maintain in solution the substances was also tested in the gaseous phase or liquid phase. Between the two phases, the liquid one has the higher solvent power.

In particular, in some tests, it was possible to keep in solution straight chain hydrocarbons and also to solubilize a number of polycyclic aromatic hydrocarbons (PAHs), which are solid, with concentrations of 500 ppb. It's possible that the solubility of these compounds at sub-critical CO₂ is still higher.

Another laboratory test carried out on sand contaminated by hydrocarbons has highlighted the capability of CO₂ to induce the desorption of organic material. The test was performed on a volume of about 0.2 liters of sand saturated with water, injecting gaseous CO₂ for a time of 1 hour. The following table reports the results obtained in terms of reduction of organic content (VS - volatile solids) and microbiological count (TBC - total bacterial count) coated on the sand after CO₂ desorption.

**Table: Results of CO₂ treatment test of sand contaminated by hydrocarbons**

| **Sample** | **VS** | **TBC** |
|---|---|---|
| | mg/kg | CFU/g |
| Tₒ | 31315 | 2,6E+07 |
| T_{final} | 25600 | 6,8E+05 |

According to the tests results, it is clear the CO₂ capability to remove the organic material from the surface of the sand and to keep the compounds in solution. The tests have also highlighted the effect of CO₂ on the microbiological total count, resulting in reduction of concentration of two orders of magnitude. This effect is also considered in the process of the invention.

From the microbiological point of view, the CO₂ has mainly a bacterium-static action, and the initial reduction in bacterial activity may be reinstated in time. It is emphasized that this property makes possible the combination of the treatment system with CO₂ to a subsequent bioremediation system, for example using the oxygen insufflation system disclosed in EP 1914016. Documents US-B1-6379083, EP-A2-1029604 and US-A-5290528 are disclosing a system of reclamation of contaminated soils where carbon dioxide dissolved in water is fed in earth. Water is then pumped from the ground to remove contaminants. Document US-A1-2007/0144975 is disclosing a method to remediate ground water by adding an oxygen containing gas by diffusion into the ground water. This document also specifies that the gas injected in the ground water may alternatively be carbon dioxide

### Detailed description of the invention

1. Object of the invention is a process for soil remediation which comprises the injection and/or diffusion of carbon dioxide used as a solvent for contaminants which are transported thereby in the soil upper layer followed by:
   - excavation and disposal of the superficial layer in which all the contaminants are concentrated;
   - recovery and reuse of CO₂ by capturing and extraction trough suction and/or pressure control systems;
   - purification of the extracted CO₂ in order to remove particulates, humidity, contaminant fraction dragged, and gases.

In particular, the application is based on the exploitation of physical and chemical properties of carbon dioxide in promoting the desorption and/or dissolution of organic and/or inorganic contaminants from matrices of soil and/or sediments.

The mechanisms of desorption and/or dissolution by carbon dioxide allow to obtain:
- extraction and/or recovery of contaminants;
- transport of contaminants from deeper layers to more superficial layers of the soil;
- availability of the contaminants in the soil for subsequent removal processes (biological, chemical and/or physical).

The invention refers to *in-situ*, on-site and *ex-situ* remediation processes.

In case of *in-situ* treatment, the invention relates to the injection and/or diffusion of carbon dioxide in the saturated and/or unsaturated soil. Carbon dioxide can be injected into the ground in gaseous, or liquid form.

In case of on-site and *ex-situ* treatment, the invention relates to the injection/diffusion of carbon dioxide in excavated soil or dredged sediment, collected in heaps or sent to dedicated reactors. Carbon dioxide can be injected into soil and sediments gaseous or liquid.

In any case, *in-situ,* on-site or *ex-situ,* carbon dioxide can be injected in pure form (gaseous or liquid), or mixed, or sequentially (first one gas then the other or others), or alternate (alternating injection of CO₂ and other gas(es) with other gases. In particular, said other gases include:
- inert gases (nitrogen, argon) or air in order to promote dilution of the CO₂ stream and allowing an increase of the radius of action of the injection or to remove the remaining CO₂ and restore neutral pH conditions of the soil;
- oxidizing gas (air, oxygen, ozone), in order to combine the processes of desorption/dissolution induced by CO₂ with oxidation processes (chemical and/or biological) induced by the oxidizing gas;
- reducing gases (hydrogen, methane, propane), in order to combine the processes of desorption/dissolution induced by CO₂ with reduction processes (chemical and/or biological) induced by the reducing gas;
- noble gases (helium, neon, argon, krypton, xenon, radon) to determine the radius of influence of the injection system.

In the case of mixtures, CO₂ and other gases are injected into the ground by a single feeding line. In the case of combinations, CO₂ and other gases are injected with independent feeding lines. In the latter case, the injection of CO₂ and other gases can be simultaneous or alternate.

At the end of the injection of gaseous or liquid CO₂, the injection into the soil of another gas can be considered, such as nitrogen or air, in order to promote the removal of the remaining CO₂ and/or restore the pH of the ground. As said before, the introduction of CO₂ lowers the pH of the soil and water and, therefore, if it is expected a finishing stage for the removal of residues of pollutants by biological system, it may be convenient to adjust the pH to the neutral value to facilitate this process.

CO₂ acts as a solvent for contaminants and can accordingly be considered a carrier allowing the extraction or the transport of pollutants in the soil upper layer. After transportation of contaminants in the upper layer of the soil, the site remediation can be completed by excavation and disposal of the superficial layer in which all the pollutants were concentrated.

CO₂ is recovered and reused. Recovery includes a step of capturing and extraction trough systems of suction and/or pressure control. The extracted CO₂ is conveyed to a purification system to remove particulates, humidity, contaminant fraction dragged, and the presence of other gases (such as air). CO₂ purification systems may consist of chemical or chemical-physical processes such as filtration, adsorption, chemical and/or photo-chemical reactions, selective separation, condensation, and generally any other type of purification system.

In all cases, the application of CO₂ involves the provision of a system of safety devices for monitoring pressures and compositions of exhaust gases trapped, or atmosphere formed within wells, piles and/or the reactor in order to prevent the establishment of overpressure or explosion conditions.

Where the treatment by CO₂ determined the production of leachate or, in general, liquid effluents, such as it may occur in the process of injection of dissolved CO₂ for *ex-situ* treatment of soil, the process provides a storage compartment and subsequent treatment/disposal. In case of leachate treatment, it can be used any kind of technology of chemical, chemical-physical and/or biological wastewater treatment.

The application of carbon dioxide in soils, sediments and aquifers involves the use of injection systems that differ in function of the physical state in which CO₂ is injected and the conditions of employment. In the applications described below the apparatus with which the CO₂ is made available to the injection or the dissolution is given only by way of example and for completeness of information. Any other system that makes available the CO₂, liquid or gaseous, can be used.

The general description of the process steps, depending on the application, are listed below. They are also shown in the annexed drawings.
a) "Storage of liquid gas in cryogenic tank or compressed gas in cylinders and/or cylinder packs". The type of storage can be any of those now known: cylinders, cylinder packs, tube trailer, liquefied gas tanks; they can also be used other systems such as, for example, the production of CO₂ from gaseous effluents, or the use of CO₂ in pipelines. In the storages of gases is present CO₂ to be used and also, if planned, other gases listed in this specification.
b) "Stage of evaporation (in the case of storage of liquid gas)". The stage of evaporation is designed to bring CO₂ into a gaseous form and it can be realized in any known manner. The fluid providing heat can be water, air, or another fluid available on site at a suitable temperature, or an electric heater.
c) "Reduction of gas pressure". The reduction of pressure, almost always necessary because CO₂ is stored at pressure > 1 bar, can be achieved with a reduction system according to the technique. The final pressure of CO₂ is the one useful to inject the gas, but it may even be given a pressure of 10-20 bar higher than the minimum pressure required when you also want to have a mechanical action on the soil.
d) "Flow regulation of gas supplied". The flows that can be used are from 0.1 to 10,000 m³/h (ten thousand m³/h). It can also be used the CO₂ recovered from the previous injections. The flow is intended as Nm³ (normal m³ of gas), even when supplied by liquid CO₂. The regulation of the desired flow is performed using valves or flow controllers, already on the market. The injection can be performed with pulses or in continuous.
e) "Injection well or wells" in saturated or unsaturated soil. The number of injection wells depends on the size of the plant, which in its turn depends on the structure and composition of the soil, the amount of pollutant, the time in which it is desired to perform the intervention, the need to dose a maximum of CO₂ in each well.
f) "CO₂ injection system". CO₂ can be injected through pipes and/or diffusers/ejectors. Injection of CO₂ can be performed directly, i.e. through the hole or a series of holes of the inlet pipe, or it can be dispensed through diffusers or liquid/liquid or gas/liquid ejectors, if it dosed in water. The CO₂ release way can be different depending on it is placed as unique gas or with other gases.
g) "Surface coverage system". The surface coverage is designed to trap the CO₂ that could migrate in the atmosphere and it can be done with any coverage deemed appropriate as, for example, plastic sheets, brick materials, asphalts, layer of impermeable soil, concrete, compacted soil cover.
h) "CO₂ capture/extraction system". The system extracts the residual CO₂ and the volatilized substances dissolved in it, and possibly other gases present in the soil. The extraction system of the CO₂ remained gaseous, vaporized, or present in water, is designed to remove along with it the pollutants that it was intended to dissolve or remove from the soil. The collection can be performed using a series of wells, which have from time to time the aim to extract the gas phase, containing CO₂, air and impurities, or the liquid phase, that is water rich in CO₂, air and impurities. The extraction can be performed by applying a vacuum for the aspiration of the gas phase, or using pumps, for suction of the liquid phase. The number of wells depends on their radius of influence, from the collection system chosen, from the type of soil to be reclaimed, from the amount of pollutant to be removed, from the removal rate to be pursued.
i) "CO₂ purification and recovery system". The purification system of CO₂, that is removal of taken away impurities contained therein, can be either chemical (oxidation with oxygen, ozone or other oxidants), physical (condensation of impurities), physical-chemical (absorption/adsorption on substrate) or biological. It may be necessary to use a series of stages with different methods to remove impurities as some of them can be removed only from one type of technology. The choice of removal system depends on the pollutants and their concentration. The quantity of sucked air present in the CO₂ flow can affect the choice of treatment systems.
j) "Recirculation of recovered CO₂". The recirculation of CO₂ recovered can be done through its compression or through suction in a Venturi-system or though the depression of the main flow of CO₂.
k) "Feeding and dispersion line of dissolved CO₂". The dissolved CO₂ is dispersed in the pile of contaminated soil by surface or sub-surface watering. The dispersion of CO₂ in the heaps of soil may be by direct injection of CO₂.
l) "Leachate drainage system". The drainage must be provided for full recovery of the water percolated into the heap of soil.
m) "System of collection and treatment/disposal of leachate". The collection and subsequent delivery to the treatment of leachate is performed with one of the systems in use. The treatment is chosen considering the type and concentration of pollutants and it can be either chemical (oxidation with oxygen, ozone or other oxidants), physical (condensation of impurities), physical-chemical (absorption/adsorption on substrate) or biological. It may be necessary to use a series of stages with different methods to remove impurities as some of them can be removed only from one type of technology.

### Description of the Figures

**Figure 1** shows the state diagram of CO₂.
**Figure 2** shows the application of liquid or gaseous CO₂ in-situ (saturated soil): the reference numbers 1-5 designate the following elements:
   *1: liquid and*/*or gaseous CO₂ storage compartment (tanks or cylinders)*
   *2: CO₂ flow control system (pressure reducers, flow regulators*
   *3: CO₂ injection system (diffuser*/*ejector)*
   *4: CO₂ purification and collection system*
   *5: CO₂ recycling system*
   *6: surface coverage*
   *7: Land area.*

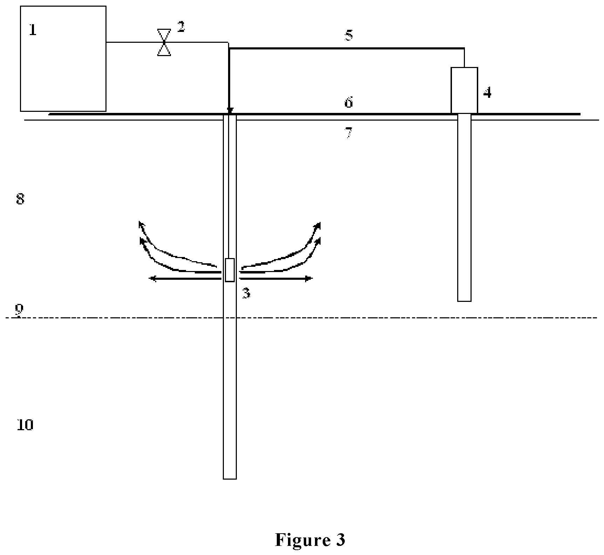

**Figure 3** shows the application of liquid or gaseous CO₂ in-situ (unsaturated soil): the reference numbers 1-5 designate the following elements:
   *1: liquid and*/*or gaseous CO₂ storage compartment (tanks or cylinders)*
   *2: CO₂ flow control system (pressure reducers, flow regulators)*
   *3: CO₂ injection system (diffuser*/*ejector)*
   *4: CO₂ purification and collection system*
   *5: CO₂ recycling system*
   *6: surface coverage*
   *7: ground level*
   *8: unsaturated soil*
   *9: groundwater level*
   *10: saturated soil.*

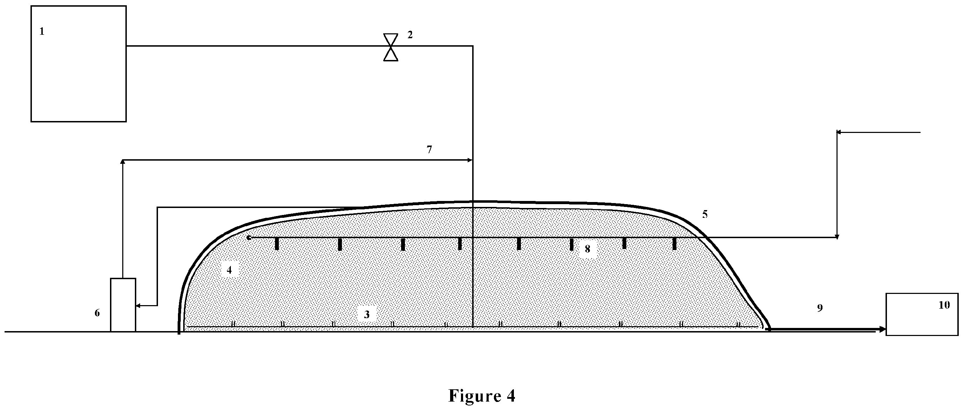

**Figure 4** shows the application of ex-situ or on-site liquid or gaseous CO₂: the reference numbers 1-5 designate the following elements:
   *1: liquid and*/*or gaseous CO₂ storage compartment (tanks or cylinders)*
   *2: CO₂ flow control system (pressure reducers, flow regulators)*
   *3: CO₂ distribution line in soil accumulation*
   *4: soil accumulation*
   *5: soil coverage*
   *6: CO₂ purification and collection system*
   *7: CO₂ recycling*
   *8: watering line (external or internal to the heap)*
   *9: leachate drainage line*
   *10: leachate treatment system.*

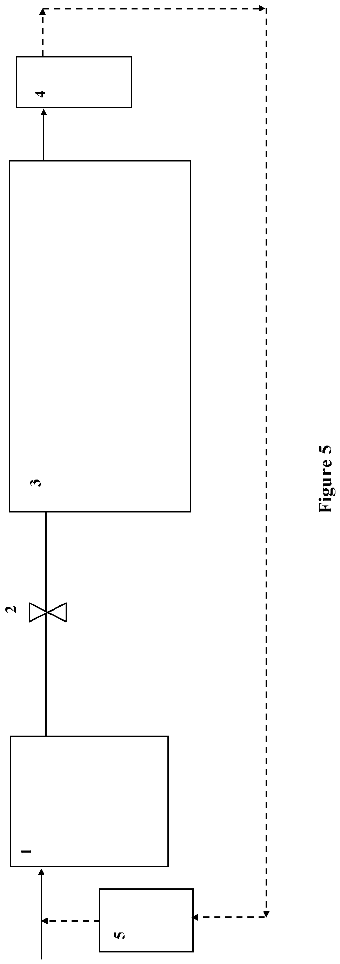

**Figure 5** shows the ex-situ/on site application of liquid or gaseous CO₂ in a pressurized reactor: the reference numbers 1-5 designate the following elements:
   *1: liquid CO₂ storage compartment*
   *2: CO₂ flow control system*
   *3: pressure reactor*
   *4: CO₂ purification system*
   *5: System of liquefaction, or the re-releasing in pressure, of CO₂ recovered.*

For all the proposed uses, the process described can be replicated a number of times considered sufficient, based on the considered appropriate size, depending on the area to be reclaimed, on the radius of influence of the injection and collection system selected, on the type of soil to be reclaimed, on the amount of pollutant to be removed and on the removal rate to be pursued.

In all applications below proposed the injection of CO₂ can be done:
a) in continuous;
b) by instant injection (or with a short duration time) of a known volume of gaseous or liquid CO₂ with a flow equivalent to 0.1 to 10,000 Nm³/h (ten thousand Nm³/h) (possibly using the recovered CO₂);
c) by pulses;
d) alternated with other gases.

### Liquid or gaseous carbon dioxide in-situ

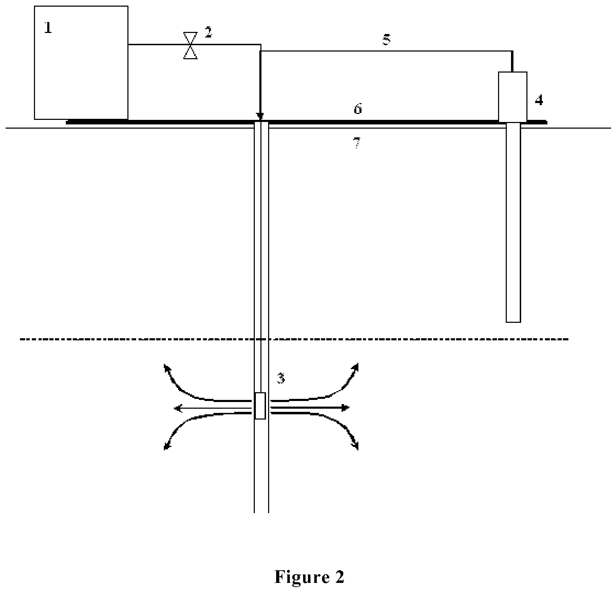

In the case of the use of liquid or gaseous carbon dioxide *in-situ* applied to the soil saturated or unsaturated, systems of injection/diffusion comprise (Fig. 2-3):
a) storage of liquid gas in cryogenic tank or compressed gas in cylinders and/or cylinder bundles;
b) stage of evaporation (in the case of storage of liquid gas);
c) gas pressure reduction;
d) regulation of the flow of gas supplied;
e) well or wells of injection in the saturated or unsaturated ground;
f) CO₂ injection system;
g) system of surface coverage;
h) system of collection and extraction of CO₂;
i) system of purification and recovery of CO₂;
j) recirculation of the recovered CO₂.

### Liquid or gaseous carbon dioxide on-site or ex-situ

In the case of use of gaseous carbon dioxide on-site or *ex situ* (Fig. 4), systems of injection/diffusion comprise:
a) pile of contaminated soil to be treated covered with tarpaulin;
b) storage of liquid gas in cryogenic tank or compressed gas in cylinders and/or cylinder bundles;
c) evaporating compartment (for storage of liquid gas);
d) reduction of gas pressure;
e) regulation of the flow of gas;
f) CO₂ injection system;
g) system of collection and extraction of remaining CO₂;
h) system of purification and recovery of CO₂;
i) recirculation of recovered CO₂.

The on-site/*ex-situ* treatment may also include the wetting of the pile of soil by a system of surface or sub-surface watering. In these cases, treatment also includes a system of drainage, collection and treatment/disposal of leachate.

### Liquid or gaseous carbon dioxide on-site or ex-situ in pressurized reactor

In the case of the use of liquid carbon dioxide on-site/ex-situ (Fig. 5), systems of injection/diffusion comprise:
a) pressurized reactor containing contaminated soil;
b) storage of liquid gas in cryogenic tank or storage of gaseous CO₂;
c) regulation of the flow of CO₂ supplied to values equivalent to 0.1 to 10,000 m³/h (possibly using the recovered CO₂), the flow is intended as Nm³ (normal m³ of gas);
d) feeding system of CO₂ in the reactor;
e) system of collection/extraction from the reactor of residual CO₂ and volatilized substances;
f) system of purification and recovery of CO₂;
g) recirculation of the recovered CO₂.

Alternatively, CO₂ can be introduced into the pressurized reactor already dissolved in water. In this case, the system also provides:
h) water supply line;
   reactor of CO₂ dissolution in water.

## Claims

1. A process for soil remediation which comprises the injection and/or diffusion of carbon dioxide used as a solvent for contaminants which are transported thereby in the soil upper layer, the process being charaterized by the further following steps of :
- excavation and disposal of the superficial layer in which all the contaminants are concentrated;
- recovery and reuse of CO₂ by capturing and extraction trough suction and/or pressure control systems;
- purification of the extracted CO₂ in order to remove particulates, humidity, contaminant fraction dragged, and gases.

2. Process according to claim 1, wherein carbon dioxide is applied *in-situ*, on-site or *ex-situ,* by injection according to one of the following modalities:
a) in continuous;
b) instantaneous, or with a short duration time, of a known volume of gaseous or liquid CO₂ with a flow equivalent to 0.1 to 10,000 Nm³/h (ten thousand Nm³/h);
c) by pulses;
d) alternated with other gases.

3. Process according to claim 1 to 2, in which carbon dioxide is injected pure, mixed and/or combined with inert gases, with oxidant gases, with reducing gases or with mixtures of these gases.

4. Process according to any of claims 1 to 3, in which carbon dioxide is injected into the soil *in-situ* or on-site or *ex-situ* in pile or in a reactor, mixed with other gases through a single feeding pipe or by independent feeding lines.

5. Process according to claim 4 wherein, depending on the area to be reclaimed and the radius of influence, the injection and the collection of carbon dioxide are replicated by the number of times calculated in function of the considered appropriate sizing and where injection wells are located within the contaminated area, upstream or downstream of this.

6. Process according to claim 1, wherein the purification of carbon dioxide is carried out by chemical or physical-chemical processes of filtration, carbon adsorption, chemical and/or photo-chemical reactions, selective separation or condensation.

7. Process according to claim 1, wherein, in the case of *in-situ* treatment, air, nitrogen, oxygen or mixtures thereof are injected in order to remove the carbon dioxide remained in soil or groundwater.

8. Process according to claim 7, wherein the gas injection is performed in order to create a favorable condition to microbial degradation in soil or groundwater.

9. Process according to claim 7, wherein the gas injection is performed to restore the conditions of pH and other characteristics of the soil present before the treatment with carbon dioxide.

10. Process according to claim 1, in which the reuse of carbon dioxide involves the re-compression or re-liquefaction.

11. Process according to any of the previous claims, for *in-situ* treatment based on the use of carbon dioxide in gaseous or liquefied form, comprising:
- storage of liquid gas in cryogenic tank or gas compressed in cylinders and/or cylinder bundles;
- evaporation, in the case of storage of liquid gas;
- pressure reducing of compressed gas at pressures up to 1-40 bar;
- flow regulation of gas supplied to values of 0.1-10,000 m³/h;
- injection in well/wells in saturated or unsaturated soil;
- injection of CO₂ through pipe and diffusers/ejectors;
- surface cover with tarpaulin, brick materials, asphalt or other;
- collection/extraction of residual CO₂ and volatilized substances;
- purification and recovery of CO₂;
- recirculation of CO₂ recovered.

12. Process according to any of claims 1-10 for on-site/*ex-situ* treatment based on the use of carbon dioxide in gaseous or liquid form, comprising:
- accumulation of contaminated soil to be treated and covered with a tarpaulin;
- storage of liquid gas in cryogenic tank or gas compressed in cylinders and/or cylinder bundles;
- evaporation, in the case of storage of liquid gas;
- pressure reducing of compressed gas at pressures up to 1-40 bar;
- flow regulation of gas supplied to values of 0.1-10,000 m³/h;
- injection of CO₂ through the distribution line placed at the base of the pile of soil;
- collection/extraction of residual CO₂ and volatilized substances;
- purification and recovery of CO₂;
- recirculation of CO₂ recovered;
- optional humidification of the soil pile trough a system of surface or sub-surface watering, drainage, collection and treatment/disposal of produced leachate.

13. Process according to any of claims 1-10 for on-site/*ex-situ* treatment based on the use of carbon dioxide in gaseous or liquid form, comprising:
- input of contaminated soil in pressurized reactor;
- storage of liquid gas in cryogenic tank;
- flow regulation of gas supplied to values of 0.1-10,000 m³/h;
- supplying in the reactor of gaseous, liquid or dissolved in water CO₂;
- collection/extraction of residual CO₂ and volatilized substances;
- purification and recovery of CO₂;
- re-liquefaction and recirculation of CO₂ recovered.

14. Process according to claim 11, in which insufflation is performed at several points located upstream or downstream in the area affected by the contamination.

## Patentansprüche

1. Ein Verfahren zur Bodensanierung, das das Einspritzen und/oder die Diffusion von Kohlenstoffdioxid umfasst, das als ein Lösungsmittel für Verunreinigungen verwendet wird, die dadurch in die obere Schicht des Bodens transportiert werden, wobei das Verfahren **dadurch gekennzeichnet ist, dass** es ferner die folgenden Schritte aufweist:
- Aushub und Entsorgung der oberflächlichen Schicht, in der alle Verunreinigungen konzentriert werden;
- Rückgewinnung und Wiederverwendung von CO₂ durch Auffangen und Extrahieren mittels Saug- und/oder Druckkontrollsystemen;
- Reinigung des extrahierten CO₂, um Partikel, Feuchtigkeit, mitgeschleppte Verunreinigungsfraktionen und Gase zu entfernen.

2. Verfahren gemäß Anspruch 1, wobei Kohlenstoffdioxid *in-situ*, vor Ort oder *ex-situ* durch Einspritzen gemäß einer der folgenden Modalitäten angewandt wird:
a) kontinuierlich;
b) unmittelbar, oder innerhalb einer kurzen Zeitdauer, eines bekannten Volumens von gasförmigem oder flüssigem CO₂ mit einer Flussrate entsprechend 0,1 bis 10.000 Nm³/h (zehntausend Nm³/h);
c) pulsartig;
d) abwechselnd mit anderen Gasen.

3. Verfahren gemäß Anspruch 1 bis 2, in dem Kohlenstoffdioxid in Reinform, gemischt und/oder kombiniert mit inerten Gasen, mit oxidierenden Gasen, mit reduzierenden Gasen oder mit Gemischen dieser Gase, eingespritzt wird.

4. Verfahren gemäß einem der Ansprüche 1 bis 3, in dem Kohlenstoffdioxid in den Boden *in-situ* oder vor Ort oder *ex-situ* in einen Haufen oder in einen Reaktor, gemischt mit anderen Gasen durch eine einzige Versorgungsleitung oder durch unabhängige Zuleitungen, eingespritzt wird.

5. Verfahren gemäß Anspruch 4 wobei, abhängig von der zurückzugewinnenden Fläche und dem Radius des Einflusses, das Einspritzen und das Sammeln von Kohlenstoffdioxid entsprechend der Anzahl, die in Abhängigkeit von der als angemessen angesehenen Größe berechnet wird, wiederholt werden und wobei sich die Einspritzungsbohrungen innerhalb der kontaminierten Fläche, stromaufwärts oder stromabwärts derselben befinden.

6. Verfahren gemäß Anspruch 1, wobei die Reinigung von Kohlenstoffdioxid durch chemische oder physikalisch-chemische Verfahren von Filtration, Kohleadsorption, chemischen und/oder photochemischen Reaktionen, selektiver Trennung oder Kondensation durchgeführt wird.

7. Verfahren gemäß Anspruch 1, wobei, im Fall der *in-situ* Behandlung, Luft, Stickstoff, Sauerstoff oder Gemische davon eingespritzt werden, um das im Boden oder im Grundwasser verbliebene Kohlenstoffdioxid zu entfernen.

8. Verfahren gemäß Anspruch 7, wobei die Gaseinspritzung durchgeführt wird, um eine für mikrobiellen Abbau günstige Bedingung in dem Boden oder dem Grundwasser zu schaffen.

9. Verfahren gemäß Anspruch 7, wobei die Gaseinspritzung durchgeführt wird, um die pH-Bedingungen und andere Charakteristika des Bodens, die vor der Behandlung mit Kohlenstoffdioxid vorhanden waren, wiederherzustellen.

10. Verfahren gemäß Anspruch 1, in dem die Wiederverwendung von Kohlenstoffdioxid die Wiederverdichtung oder Wiederverflüssigung beinhaltet.

11. Verfahren gemäß einem der vorangehenden Ansprüche, zur *in-situ* Behandlung basierend auf der Verwendung von Kohlenstoffdioxid in gasförmiger oder verflüssigter Form, umfassend:
- Lagerung von Flüssiggas in einem kryogenen Tank oder Gas, das in Zylindern und/oder Zylinderbündeln verdichtet ist;
- Verdampfen, im Fall der Lagerung von Flüssiggas;
- Verringern des Drucks von verdichtetem Gas bei Drücken von bis zu 1-40 bar;
- Regulieren des Flusses des eingebrachten Gases auf Werte von 0,1-10.000 m³/h;
- Einspritzen in eine oder mehrere Bohrungen in gesättigten oder ungesättigten Boden;
- Einspritzen von CO₂ durch eine Leitung und Diffusoren oder Strahler;
- Bedecken der Oberfläche mit Plane, Ziegelmaterialien, Asphalt oder anderem;
- Sammeln/Extrahieren von verbliebenem CO₂ und flüchtigen Substanzen;
- Reinigen und Rückgewinnen von CO₂;
- Wiederzuführen von rückgewonnenem CO₂.

12. Verfahren gemäß einem der Ansprüche 1-10 für vor Ort/*ex-situ* Behandlung basierend auf der Verwendung von Kohlenstoffdioxid in gasförmiger oder flüssiger Form, umfassend:
- Ansammeln von zu behandelndem kontaminiertem Boden und Bedecken desselben mit einer Plane;
- Lagerung von Flüssiggas in einem kryogenen Tank oder Gas, das in Zylindern und/oder Zylinderbündeln verdichtet ist;
- Verdampfen, im Fall der Lagerung von Flüssiggas;
- Verringern des Drucks von verdichtetem Gas bei Drücken von bis zu 1-40 bar;
- Regulieren des Flusses des eingebrachten Gases auf Werte von 0,1-10.000 m³/h;
- Einspritzen von CO₂ durch die Verteilungsleitung, die sich am Grund des Haufens des Bodens befindet;
- Sammeln/Extrahieren von verbliebenem CO₂ und flüchtigen Substanzen;
- Reinigen und Rückgewinnen von CO₂;
- Wiederzuführen von rückgewonnenem CO₂.
- gegebenenfalls Befeuchten des Bodenhaufens durch ein System der oberflächlichen oder unterirdischen Bewässerung, Drainage, Sammeln und Behandeln/Entsorgen von gebildetem Sickerwasser.

13. Verfahren gemäß einem der Ansprüche 1-10 für vor Ort/*ex-situ* Behandlung basierend auf der Verwendung von Kohlenstoffdioxid in gasförmiger oder flüssiger Form, umfassend:
- Einführen von kontaminiertem Boden in einen unter Druck stehenden Reaktor;
- Lagern von Flüssiggas in einem kryogenen Tank;
- Regulieren des Flusses des eingebrachten Gases auf Werte von 0,1-10.000 m³/h;
- Einbringen von gasförmigem, flüssigem oder in Wasser gelöstem CO₂ in den Reaktor;
- Sammeln/Extrahieren von verbliebenem CO₂ und flüchtigen Substanzen;
- Reinigen und Rückgewinnen von CO₂;
- Wiederverflüssigung und Wiederzuführen von rückgewonnenem CO₂.

14. Verfahren gemäß Anspruch 11, in der Insufflation an mehreren Punkten, die sich stromaufwärts oder stromabwärts in der durch die Kontamination betroffenen Fläche befinden, durchgeführt wird.

## Revendications

1. Procédé de remédiation de sol qui comprend l'injection et/ou la diffusion de dioxyde de carbone utilisé comme
solvant pour des contaminants qui sont transportés ainsi dans la couche supérieure du sol, le procédé étant **caractérisé par** les étapes ultérieures suivantes de :
- excavation et élimination de la couche superficielle dans laquelle tous les contaminants sont concentrés ;
- récupération et réutilisation du CO₂ par capture et extraction par succion et/ou système de contrôle de pression ;
- purification du CO₂ extrait afin de retirer les particules, l'humidité, la fraction contaminante entraînée, et les gaz.

2. Procédé selon la revendication 1, du dioxyde de carbone étant appliqué *in situ*, sur site ou hors site, par injection selon l'une des modalités suivantes :
a) en continu ;
b) de manière instantanée, ou sur une courte durée, d'un volume connu du CO₂ gazeux ou liquide avec un flux équivalent à 0,1 à 10 000 Nm³/h (dix mille Nm³/h) ;
c) par impulsions ;
d) de manière alternée avec d'autres gaz.

3. Procédé selon la revendication 1 à 2, dans lequel le dioxyde de carbone est injecté pur, mélangé et/ou associé à des gaz inertes, à des gaz oxydants, à des gaz réducteurs ou à des mélanges de ces gaz.

4. Procédé selon l'une quelconque des revendications 1 à 3, dans lequel le dioxyde de carbone est injecté dans le sol *in situ* ou sur site ou ex *situ* en tas ou dans un réacteur, mélangé à d'autres gaz à travers une conduite d'alimentation unique ou à travers des conduites d'alimentation indépendantes.

5. Procédé selon la revendication 4 dans lequel, en fonction de la zone à remettre en état et du rayon d'influence, l'injection et le recueil du dioxyde de carbone sont répliqués selon le nombre de fois calculé en fonction de l'étalonnage approprié pris en considération, les puits d'injection étant localisés au sein de la zone contaminée, en amont ou en aval de celle-ci.

6. Procédé selon la revendication 1, la purification du dioxyde de carbone étant conduite par des procédés chimiques ou physico-chimiques de filtration, adsorption de carbone, réactions chimiques et/ou photochimiques, séparation sélective ou condensation.

7. Procédé selon la revendication 1, dans lequel, dans le cas d'un traitement *in situ*, de l'air, de l'azote, de l'oxygène ou des mélanges de ceux-ci sont injectés afin de retirer le dioxyde de carbone qui demeurait dans le sol ou la nappe phréatique.

8. Procédé selon la revendication 7, dans lequel l'injection de gaz est exécutée afin de créer des conditions favorables de dégradation microbienne dans le sol ou dans la nappe phréatique.

9. Procédé selon la revendication 7, dans lequel l'injection de gaz est exécutée pour restaurer les conditions de pH et d'autres caractéristiques du sol présentes avant le traitement avec le dioxyde de carbone.

10. Procédé selon la revendication 1, dans lequel la réutilisation du dioxyde de carbone implique la re-compression ou la re-liquéfaction.

11. Procédé selon l'une quelconque des revendications précédentes, pour le traitement *in situ* sur la base de l'utilisation du dioxyde de carbone sous la forme gazeuse ou liquéfiée, comprenant :
- le stockage de gaz liquide dans une cuve cryogénique ou de gaz comprimé dans des bonbonnes et/ou des lots de bonbonnes :
- l'évaporation, dans le cas du stockage de gaz liquide ;
- la réduction de pression du gaz comprimé à des pressions atteignant 1 à 40 bars ;
- la régulation de l'écoulement du gaz alimenté à des valeurs de 0,1 à 10 000 m³/h ;
- l'injection dans un puits/des puits dans un sol saturé ou non saturé ;
- l'injection de CO₂ à travers une canalisation et des diffuseurs/éjecteurs ;
- le recouvrement de la surface avec une bâche, des briques, de l'asphalte ou autre ;
- le recueil/l'extraction de CO₂ résiduel et des substances volatilisées ;
- la purification et la récupération de CO₂ ;
- la recirculation du CO₂ récupéré.

12. Procédé selon l'une quelconque des revendications 1 à 10 destiné au traitement sur site/hors site basé sur l'utilisation du dioxyde de carbone sous la forme gazeuse ou liquide, comprenant :
- l'accumulation de sol contaminé à traiter et recouvert d'une bâche ;
- le stockage de gaz liquide dans une cuve cryogénique ou du gaz comprimé dans des bonbonnes et/ou des lots de bonbonnes ;
- l'évaporation, dans le cas du stockage de gaz liquide ;
- la réduction de pression du gaz comprimé à des pressions atteignant 1 à 40 bars ;
- la régulation de l'écoulement du gaz alimenté à des valeurs de 0,1 à 10 000 m³/h ;
- l'injection de CO₂ à travers la ligne de distribution placée à la base du tas de terre;
- le recueil/l'extraction du CO₂ résiduel et des substances volatilisées ;
- la purification et la récupération de CO₂ ;
- la recirculation du CO₂ récupéré ;
- l'humidification facultative du tas de terre à travers un système de surface ou l'arrosage en sous-surface, le drainage, le recueil et le traitement/l'élimination du lixiviat produit.

13. Procédé selon l'une quelconque des revendications 1 à 10 destiné au traitement sur site/hors site basé sur l'utilisation du dioxyde de carbone sous forme gazeuse ou liquide, comprenant :
- l'introduction du sol contaminé dans un réacteur sous pression ;
- le stockage de gaz liquide dans une cuve cryogénique ;
- la régulation de l'écoulement du gaz alimenté à des valeurs de 0,1 à 10 000 m³/h ;
- l'alimentation dans le réacteur du CO₂ gazeux, liquide ou dissous dans de l'eau ;
- le recueil/l'extraction du CO₂ résiduel et des substances volatilisées ;
- la purification et la récupération de CO₂ ;
- la re-liquéfaction et la recirculation du CO₂ récupéré.

14. Procédé selon la revendication 11, dans lequel l'insufflation est exécutée à plusieurs points localisés en amont ou en aval dans la zone affectée par la contamination.
